# EUROPÄISCHE PATENTSCHRIFT

(11) **EP 2 563 631 B1**
(45) Veröffentlichungstag und Bekanntmachung des Hinweises auf die Patenterteilung: **01.02.2017**
(21) Anmeldenummer: 11716548.0
(22) Anmeldetag: 27.04.2011
(51) Int. Cl.: B60T 8/48, B60T 8/26, B60L 7/24

(54) **VERFAHREN ZUR STEUERUNG ODER REGELUNG EINES BREMSSYSTEMS UND BREMSSYSTEM WORIN DAS VERFAHREN DURCHGEFÜHRT WIRD.**
METHOD FOR CONTROLLING OR REGULATING A BRAKING SYSTEM AND A BRAKING SYSTEM IN WHICH THE METHOD IS CARRIED OUT
METHODE POUR LA COMMANDE OU REGULATION D'UN SYSTEME DE FREINAGE ET SYSTEME DE FREINAGE DANS LEQUEL LA METHODE EST MISE EN OEUVRE

(30) Priorität: 27.04.2010 DE 102010028261
(43) Veröffentlichungstag der Anmeldung: 06.03.2013
(73) Patentinhaber: Continental Teves AG & Co. oHG, 60488 Frankfurt (DE)
(72) Erfinder: LINHOFF, Paul, 61267 Neu-Anspach (DE)
(86) Internationale Anmeldenummer: PCT/EP2011/056637
(87) Internationale Veröffentlichungsnummer: WO 2011/134987

(56) Entgegenhaltungen:
- WO-A1-00/66410
- WO-A1-94/25322
- WO-A1-2004/101308
- WO-A1-2009/030707
- DE-A1- 19 604 134
- DE-A1-102004 010 265
- DE-A1-102009 007 494

## Beschreibung

Die Erfindung betrifft ein Verfahren gemäß dem Oberbegriff von Anspruch 1 sowie ein Bremssystemgemäß dem Oberbegriff von Anspruch 5.

Kraftfahrzeuge, deren Antriebs- bzw. Bremssysteme eine oder mehrere elektrische Maschinen umfassen, gewinnen zunehmend an Bedeutung. Hierbei kann die elektrische Maschine häufig auch als Antrieb eingesetzt werden, solange eine Batterie des Kraftfahrzeugs genügend elektrische Energie gespeichert hat. Es ist z.B. im Hinblick auf die Reichweite eines elektrischen Antriebs wünschenswert, die Batterie oder die Batterien des Kraftfahrzeugs nicht nur im Stand aufzuladen, sondern dies auch während des Betriebs des Kraftfahrzeugs zu tun. Wird die elektrische Maschine als Generator betrieben, so kann beim Bremsen des Kraftfahrzeugs durch Umwandlung der Bewegungsenergie bzw. Rotationsenergie der mit dem elektrischen Antrieb verbundenen Achse bzw. der daran befestigten Räder elektrische Energie gewonnen und in der Batterie gespeichert werden.

Das durch die Rekuperation, also die (Rück-)Gewinnung von elektrischer Energie durch den Generator, aufgebaute Bremsmoment ist von der Geschwindigkeit des Kraftfahrzeugs und dem Füllstand der Batterie abhängig. Um in jedem Fall hinreichende Bremsverzögerung aufbringen zu können, weisen Bremssysteme z.B. für Hybridfahrzeuge, die elektrischen Antrieb und Verbrennungsmotor kombinieren, neben der elektrisch-regenerativen Bremse (dem als Generator betriebenen elektrischen Antrieb) zusätzliche Bremseinrichtungen auf. Diese zusätzlichen Bremseinrichtungen, die gewöhnlich in zwei gesetzlich vorgeschriebenen Bremskreisen realisiert sind, umfassen beispielsweise elektromechanische, hydraulische und/oder elektrohydraulische Reibungsbremsen.

Besonders das Zusammenwirken von hydraulischen Reibungsbremsen und einem Generator, welches wegen geringer Systemkosten und moderater Systemkomplexität wünschenswert ist, bedingt einige technische Herausforderungen: Für eine effiziente Rekuperation sollte das in der jeweiligen Fahrsituation maximal mögliche Bremsmoment des Generators genutzt werden. Weiterhin sollte ein Übergang ("Blending") zwischen einem Abbremsen des Kraftfahrzeugs durch die Bremsverzögerung des Generators und einem Abbremsen des Kraftfahrzeugs durch Reibungsbremsen möglich sein, ohne dass es zu ruckartigen Änderungen der Bremsverzögerung oder einer ungünstigen Bremskraftverteilung kommt. Außerdem muss vermieden werden, dass wegen der Entkopplung der elektrisch-regenerativen Bremsung durch den Generator von dem Bremspedal für den Fahrer ein ungewöhnliches Pedalgefühl entstehen, so dass er die von ihm erzielte Bremswirkung schlecht einschätzen kann.

In der DE 196 04 134 A1 wird ein Verfahren und eine Vorrichtung zur Steuerung der Bremsanlage von Fahrzeugen mit Elektroantrieb vorgeschlagen, bei welchen in einem ersten Bereich des Fahrerbremswunsches nahezu ausschließlich die regenerative Abbremsung das Bremsmoment aufbringt. Hierbei wird der vom Fahrer durch die Bremspedalbetätigung erzeugte Druck reduziert, indem über entsprechende Steuerung der Auslassventile das in die Radbremszylinder einströmende Druckmittel in eine Speicherkammer zurückgeführt wird. Eine Weiterentwicklung dieses Bremssystems ist z.B. aus der WO 2004/101308 A1 bekannt.

Die bisher beschriebenen Bremssysteme weisen allerdings den Nachteil auf, dass beim Befüllen der Speicherkammer bzw. des Druckspeichers in jedem Bremskreis mindestens eine Radbremse mit Druckmittel beaufschlagt wird. Somit findet immer eine Verzögerung des Fahrzeugs durch Reibungsbremsen statt, die die Effizienz der Rekuperation begrenzt, d.h. den Anteil der beim Abbremsen durch den Generator zurückgewonnenen Energie verringert.

Aus der DE 10 2009 007 494 A1 ist ein elektronisch gesteuertes Bremssystem mit einer Simulationsfunktion bekannt, welches eine Hauptzylinder, der gemäß einer Verschiebung eines Bremsbehälters einen Öldruck bildet, einen Ölbehälter, der dem Hauptzylinder Öl bereitstellt, ein Abschaltventil, das an einer Hydraulikzufuhrleitung eingebaut ist, die einen Einlass des Hauptzylinders mit einem Einlassventil einer Hydraulikbremse verbindet, eine Ölrücklaufleitung, die ein Auslassventil der Hydraulikbremse mit einem Einlass des Ölbehälters verbindet und ein Simulationsventil aufweist, das an einer Differentialeinstellungsleitung eingebaut ist, die die Hydraulikzufuhrleitung mit der Ölrücklaufleitung verbindet, um eine Pedalkraft zu erzeugen.

Aufgabe der vorliegenden Erfindung ist es, ein Bremssystem und ein Verfahren bereitzustellen, welches bei für den Fahrer komfortablem Pedalgefühl und geringer Systemkomplexität eine möglichst effiziente Rekuperation bereitstellt. Hierzu sollte die Gesamtverzögerung des Fahrzeugs, welche sich im Allgemeinen aus Verzögerungsanteilen der Reibungsbremsen und der elektrisch-regenerativen Bremse zusammensetzt, in einem ersten Verzögerungsbereich vollständig durch die elektrisch-regenerative Bremse aufgebracht werden können.

Diese Aufgabe wird erfindungsgemäß durch ein Verfahren gemäß Anspruch 1 und ein Bremssystemgemäß Anspruch 5 gelöst.

Es wird also ein Bremssystem für ein Kraftfahrzeug bereitgestellt, das an zumindest einem Rad eine elektrisch-regenerative Bremse und eine von einem ersten Bremsdruckerzeugungsmittel über ein Druckmittel hydraulisch betätigbare Reibungsbremse aufweist, wobei die Reibungsbremse über ein ansteuerbares Einlassventil mit dem ersten Bremsdruckerzeugungsmittel und über ein erstes ansteuerbares Auslassventil mit einem Druckspeicher verbindbar ist, so dass ein Ableiten eines von dem Bremsdruckerzeugungsmittel aufgebrachten Druckmittelvolumens über das erste Auslassventil in den Druckspeicher erfolgen kann. Während eines regenerativen Bremsvorgangs wird von dem ersten Bremsdruckerzeugungsmittel aufgebrachtes Druckmittelvolumen über eine weitere hydraulische Verbindung mit einem zweiten ansteuerbaren Auslassventil in den Druckspeicher abgelassen, wobei zwischen dem ersten Bremsdruckerzeugungsmittel und dem Einlassventil ein weiteres ansteuerbares Ventil angeordnet ist. Erfindungsgemäß ist das erste Bremsdruckerzeugungsmittel über eine weitere hydraulische Verbindung mit einem zweiten ansteuerbaren Auslassventil mit dem Druckspeicher verbindbar.

Bevorzugt ist das erste Bremsdruckerzeugungsmittel als über ein Bremspedal betätigter Hauptbremszylinder oder Tandemhauptbremszylinder ausgeführt, wobei diesem optional ein Bremskraftverstärker vorgeschaltet sein kann. Alternativ oder zusätzlich umfasst das Bremsdruckerzeugungsmittel bevorzugt eine Zylinder-Kolben-Anordnung, deren Kolben durch einen elektromechanischen Aktuator betätigbar ist. Unter einem ansteuerbaren Ventil wird hierbei insbesondere ein Hydraulikventil verstanden, welches eine Spule aufweist, die zum Schalten des Ventils mit einem Strom versorgt wird. Ein ansteuerbares Ventil ist vorzugsweise als über eine Magnetspule elektrisch betätigtes Hydraulikventil ausgelegt und kann dabei sowohl analog als auch digital ansteuerbar ausgelegt sein. Unter analog ansteuerbar wird hierbei verstanden, dass die Öffnung des Ventils reproduzierbar mit der angelegten Stellgröße (insbesondere dem Spulenstrom) variiert, während ein digital ansteuerbares Ventil nur zum Öffnen und Schließen eingesetzt wird.

Durch das Ableiten des Druckmittelvolumens in einen Druckspeicher findet bei einer geringen Bremspedalbetätigung durch den Fahrer eine reine oder nahezu reine elektrisch-regenerative Bremsung statt, womit sowohl eine effiziente Rekuperation als auch ein für den Fahrer komfortables Pedalgefühl (durch den einer Reibbremsung entsprechenden "Druckmittelverbrauch") gewährleistet sind. Die gespeicherte Menge von Druckmittel kann dann später für das "Blending", also einen sanften Übergang zwischen einem Abbremsen des Kraftfahrzeugs durch die Bremsverzögerung des Generators und einem Abbremsen des Kraftfahrzeugs durch Reibungsbremsen herangezogen werden. Da ein Befüllen des Druckspeichers über das zweite ansteuerbare Auslassventil, also ein eigenes ansteuerbares Hydraulikventil erfolgen kann, verringert sich die Anzahl der Betätigungen zumindest der Auslassventile der Reibungsbremsen. Somit wird die Lebensdauer des Bremssystems verlängert.

Um Druckmittel möglichst einfach über ein ansteuerbares Hydraulikventil, welches bevorzugt als stromlos geschlossenes SG-Ventil ausgelegt ist, in den Druckspeicher abführen zu können, ist der Druckspeicher im Vergleich zum Hydrauliksystem des Bremssystems vorzugsweise als Niederdruckspeicher (NDS) ausgelegt. Aufgrund des Druckunterschiedes muss zum Ableiten von Druckmittel in den Druckspeicher lediglich ein Hydraulikventil geöffnet werden.

Zweckmäßigerweise wird Druckmittel in den oder die Druckspeicher abgeleitet, welche auch für den Druckabbau z.B. während einer Bremsschlupfregelung eingesetzt werden. Dies begrenzt die Anzahl zusätzlich benötigter Komponenten.

Vorzugsweise zweigt die weitere hydraulische Verbindung zwischen erstem Bremsdruckerzeugungsmittel und Einlassventil ab. Somit kann auch bei abgetrennten Reibungsbremsen Druckmittel in den Druckspeicher abgeleitet werden. Dadurch, dass die Reibungsbremsen zweckmäßigerweise von dem Bremsdruckerzeugungsmittel abgetrennt werden, wird von den Reibungsbremsen keine Verzögerung aufgebaut, womit die vom Generator erzeugte elektrische Energie maximiert wird.

Es ist vorteilhaft, wenn zwischen dem ersten Bremsdruckerzeugungsmittel und dem Einlassventil ein weiteres ansteuerbares Ventil angeordnet ist und das erste Bremsdruckerzeugungsmittel über das weitere ansteuerbare Ventil und das zweite Auslassventil mit dem Druckspeicher verbindbar ist. Dies erlaubt eine größere Flexibilität der je nach Ansteuerung des Bremssystems hydraulisch verbundenen Komponenten.

Zweckmäßigerweise weist das Bremssystem ein zweites Bremsdruckerzeugungsmittel auf, insbesondere ein Motor-Pumpen-Aggregat bzw. eine Hydraulikpumpe, mit welchem Druckmittel aus dem Druckspeicher in die Reibungsbremse befördert werden kann. Somit kann auch fahrerunabhängig ein Bremsmoment erzeugt werden. Dies ermöglicht sowohl eine Fahrstabilitätsregelung als auch eine Kompensation einer Verringerung der elektrisch-regenerativen Bremsverzögerung, die z.B. bei Unterschreiten einer bestimmten Mindestgeschwindigkeit (von typisch 10 km/h) eintritt.

Jeder der Druckspeicher ist vorteilhafterweise ausgangsseitig mit einem zweiten Bremsdruckerzeugungsmittel (z.B. einem Motor-Pumpen-Aggregat) verbunden. Bei einer Bremsmomentumverteilung von elektrisch-regenerativer Bremse auf die Reibungsbremsen wird das dafür benötigte Druckvolumen des Druckmittels über das zweite Druckerzeugungsmittel aus dem Druckspeicher in die entsprechenden Hydraulikleitungen der Reibungsbremsen befördert. Zweckmäßigerweise wird ein Einfluss auf das erste Bremsdruckerzeugungsmittel dadurch verhindert, dass dieses über Hydraulikventile von den Reibungsbremsen abgetrennt wird.

Bevorzugt ist dass das zweite Bremsdruckerzeugungsmittel parallel zu dem zweiten Auslassventil zwischen Druckspeicher und erstem Bremsdruckerzeugungsmittel angeordnet. Durch Schließen des weiteren ansteuerbaren Ventils können Reibungsbremse und zweites Bremsdruckerzeugungsmittel vollständig vom ersten Bremsdruckerzeugungsmittel abgetrennt werden, wodurch Rückwirkungen auf das erste Bremsdruckerzeugungsmittel verhindert werden.

Besonders bevorzugt ist zwischen der Ansaug- bzw. Einlass-Seite des zweiten Bremsdruckerzeugungsmittels und dem ersten Bremsdruckerzeugungsmittel ein zusätzliches, insbesondere stromlos geschlossenes, ansteuerbares Ventil angeordnet. Somit steht ein zusätzlicher hydraulischer Pfad zur Druckmittelversorgung des zweiten Bremsdruckerzeugungsmittels bereit.

Vorzugsweise ist in jedem Bremskreis an mindestens einer Reibungsbremse ein Drucksensor angebracht. Durch Messung des Drucks in einer an einem Rad angeordneten Reibungsbremse kann das Bremsmoment z.B. bei einer Bremsschlupfregelung genauer dosiert werden.

Gemäß einer bevorzugten Ausführungsform der Erfindung sind an den Rädern einer ersten Achse des Fahrzeugs, insbesondere der Vorderachse, über ein Druckmittel hydraulisch betätigbaren Reibungsbremsen angeordnet, während an den Rädern einer zweiten Achse des Fahrzeugs, insbesondere der Hinterachse, elektromechanisch betätigbaren Reibungsbremsen angeordnet sind. Da an der Hinterachse ein weniger starkes Bremsmoment als an der Vorderachse aufgebaut werden muss, kann die Spannungsversorgung weiterhin mit der üblichen Fahrzeugbatterie erfolgen. Insbesondere ist die elektrisch-regenerative Bremse an der Vorderachse angeordnet, da dies eine starke Verzögerung durch den Generator ermöglicht, ohne die Fahrstabilität zu gefährden.

In einer alternativen bevorzugten Ausführungsform der Erfindung sind an allen Räder des Fahrzeugs über ein Druckmittel hydraulisch betätigbare Reibungsbremsen angeordnet, wobei je zwei Reibungsbremsen in einem Bremskreis zusammengefasst sind.

Gemäß einer besonders bevorzugten Ausführungsform der Erfindung ist der erste Bremskreis der Vorderachse und der zweite Bremskreis der Hinterachse des Kraftfahrzeugs zugeordnet. Insbesondere weist nur einer der beiden Bremskreise das erfindungsgemäße zweite Auslassventil auf. Somit verringert sich die Anzahl zusätzlich benötigter Komponenten.

In einer alternativen besonders bevorzugten Ausführungsform der Erfindung sind jeweils eine Reibungsbremse eines Vorderrads und eine Reibungsbremse eines diagonal gegenüberliegenden Hinterrads in einem Bremskreis zusammengefasst, und jeder Bremskreis weist ein zweites ansteuerbares Auslassventil und einen Druckspeicher auf. Somit ist auch bei einem diagonal aufgeteilten Bremssystem eine reine elektrisch-regenerative Verzögerung möglich, d.h. der Wirkungsgrad der Rekuperation wird maximiert.

Es ist vorteilhaft, wenn das Bremssystem eine Fahrdynamikregelung aufweist, die Schlupf- und/oder Gierverhalten des Fahrzeugs regelt. Somit wird die Fahrsicherheit des Fahrzeugs erhöht.

Besonders vorteilhaft ist es, wenn die elektrisch-regenerative Bremse von der Fahrdynamikregelung angesteuert wird. Somit kann auch bei einer fahrerunabhängigen Bremsung eine Rekuperation stattfinden.

Die Erfindung betrifft auch ein Verfahren zur Steuerung oder Regelung eines Bremssystems für ein Kraftfahrzeug, das an zumindest einem Rad eine elektrisch-regenerative Bremse und eine von einem ersten Bremsdruckerzeugungsmittel über ein Druckmittel betätigbare Reibungsbremse aufweist, wobei die Reibungsbremse über ein ansteuerbares Einlassventil mit dem Bremsdruckerzeugungsmittel und über ein erstes ansteuerbares Auslassventil mit einem Druckspeicher verbindbar ist, so dass ein Ableiten eines von dem ersten Bremsdruckerzeugungsmittel aufgebrachten Druckmittelvolumens über das erste Auslassventil in den Druckspeicher erfolgen kann. Erfindungsgemäß wird während eines regenerativen Bremsvorgangs von dem ersten Bremsdruckerzeugungsmittel aufgebrachtes Druckmittelvolumen über ein zweites ansteuerbares Auslassventil, welches in einer weiteren hydraulische Verbindung zwischen dem Bremsdruckerzeugungsmittel und dem Druckspeicher angeordnet ist, in den Druckspeicher abgelassen und nach Beendigung eines regenerativen Bremsvorgangs wird der Druckspeicher durch Öffnen des ersten oder zweiten Auslassventils geleert. Somit wird ein für den Fahrer angenehmes Pedalgefühl gewährleistet.

Um genau das entsprechende Bremsverhalten, das bei Reibungsbremsen eintreten würde, zu simulieren, wird vorteilhafterweise genau das Druckmittelvolumen von Druckmittel in den oder die Druckspeicher abgeleitet, das von Reibungsbremsen aufgenommen werden würde, wenn das von einer elektrisch-regenerativen Bremse aufgebrachte Bremsmoment allein mit hydraulischen Reibungsbremsen aufzubringen wäre.

Vorzugsweise wird zum Ablassen von Druckmittelvolumen in den Druckspeicher das Einlassventil geschlossen und das zweite Auslassventil geöffnet wird. Dies ermöglicht es, den Wirkungsgrad der Rekuperation zu maximieren.

Es ist vorteilhaft, wenn insbesondere zur Zuschaltung der Reibungsbremse bei einem regenerativen Bremsvorgang, das zweite Auslassventil geschlossen wird, das Einlassventil geöffnet wird und das erste Auslassventil geschlossen bleibt oder wird. Dadurch kann das aufgebaute Bremsmoment mit geringem Aufwand erhöht werden.

Zweckmäßigerweise wird das Befüllen des oder der Druckspeicher beendet, wenn ein vorgegebenes Maß einer Betätigung eines Bremsbetätigungspedals erreicht ist, wobei das vorgegebene Maß insbesondere mittels eines Pedalwinkelsensors oder eines Wegsensors am Tandemhauptbremszylinder detektiert wird und einem vorgegebenen Wert des durch die elektrisch-regenerative Bremse oder Bremsen gelieferte Bremsmoments entspricht, insbesondere einem maximal gelieferten Bremsmoment der elektrisch-regenerative Bremse oder Bremsen. Eine Steuerung des Bremssystems anhand eines derartigen Signals ist einfach zu realisieren.

Es ist zweckmäßig, wenn die in den/die Druckspeicher abgeleitete Menge von Druckmittel bei mehrkreisigen hydraulischen Bremsanlagen je nach Aufteilung der Bremskreise angepasst wird. Für diagonal aufgeteilte Bremskreise ist es besonders zweckmäßig, wenn die Druckspeicher jeweils die gleiche Menge Druckmittel aufnehmen. Besonders zweckmäßig ist es, wenn der Druckspeicher eines der Vorderachse zugeordneten Bremskreises eine größere Menge von Druckmittel speichert als der Druckspeicher eines der Hinterachse zugeordneten Bremskreises, wobei das Verhältnis insbesondere im Bereich 80:20 bis 66:33 liegen sollte.

Wenn die vom Fahrer angeforderte Bremsverzögerung die vom Generator maximal bereitgestellte Verzögerung übersteigt, wird/werden die bisher abgetrennte/n Reibungsbremse/n bevorzugt wieder mit dem ersten Bremsdruckerzeugungsmittel verbunden, womit die fehlende Verzögerung durch Reibung bereitgestellt wird. In einer besonders bevorzugten Ausführungsform der Erfindung erfolgt dieses Verbinden der bisher abgetrennte/n Reibungsbremse/n mit dem ersten Bremsdruckerzeugungsmittel erst dann, wenn die vom Fahrer angeforderte Bremsverzögerung um einen vorgegebenen Schwellwert, welcher insbesondere im Bereich von 0,0g bis 0,5g liegt (g bezeichnet die Erdbeschleunigung), über der vom Generator maximal bereitgestellten Verzögerung liegt. Ein Öffnen des Einlassventils der abgetrennte/n Reibungsbremse/n kann wegen eines hohen Verzögerungswunsches oder wegen einer bei niedrigen Geschwindigkeiten abnehmenden Generatorverzögerung erforderlich sein.

Zweckmäßigerweise wird zum Aufbau von Bremsdruck in der Reibungsbremse Druckmittel von einem zweiten Bremsdruckerzeugungsmittel, insbesondere einer elektrisch angetriebenen Hydraulikpumpe, aus dem Druckspeicher in die Reibungsbremse befördert, wobei das zweite Bremsdruckerzeugungsmittel parallel zu dem zweiten Auslassventil zwischen Druckspeicher und Bremsdruckerzeugungsmittel angeordnet ist. Dieser aktive Aufbau von zusätzlichem Bremsdruck kann wegen eines hohen Verzögerungswunsches oder wegen einer bei niedrigen Geschwindigkeiten abnehmenden Generatorverzögerung vorteilhaft sein.

Bevorzugt wird nach Beendigung eines regenerativen Bremsvorgangs der Druckspeicher durch Öffnen des ersten oder zweiten Auslassventils geleert. Somit wird sichergestellt, dass bei zuküftigen Bremsvorgängen ein Ableiten des Druckmittels in den Druckspeicher ohne zeitliche Verzögerung möglich ist.

Vorzugsweise erfolgt eine Bremsung nur mit Reibungsbremsen, wenn das Kraftfahrzeug eine vorgegebene Mindestgeschwindigkeit unterschreitet. Bei Geschwindigkeiten unterhalb von z.B. 10 km/h nimmt die vom Generator aufgebaute Verzögerung stark ab.

Es ist vorteilhaft, wenn eine Bremsung nur mit Reibungsbremsen erfolgt, sobald die angeforderte Verzögerung eine vorgegebene Schwelle überschreitet. Hierdurch wird eine Gefährdung der Fahrstabilität durch eine ungünstige Bremskraftverteilung vermieden und das Eingreifen einer Bremsschlupfregelung erleichtert.

Das Bremspedal weist vorzugsweise einen Pedalbetätigungssensor, z.B. in Form eines Pedalweggebers oder Pedalwinkelgebers, auf. Alternativ oder zusätzlich weist das Bremssystem bevorzugt einen Drucksensor auf, der in einer zum Druckerzeugungsmittel (z.B. Hauptzylinder) führenden Bremsleitung angeordnet ist. Anhand des Pedalbetätigungssensors und/oder des Drucksensors kann eine Ermittlung der Betätigung und/oder des Maßes der Betätigung des Bremspedals erfolgen. Bevorzugt wird das Signal des Pedalbetätigungssensors und/oder Drucksensors zur Steuerung oder Regelung des Bremssystems herangezogen.

In einer bevorzugten Ausführungsform der Erfindung findet eine Plausibilisierung der Signale des Pedalbetätigungssensors anhand einer Messung der Position des ersten Bremsdruckerzeugungsmittels statt, wobei diese insbesondere durch einen induktiven Sensor gemessen wird. In einer alternativen bevorzugten Ausführungsform der Erfindung wird eine sichere Erkennung des Fahrerwunschs gewährleistet, indem ein zusätzlicher Schalter an geeigneter Position montiert wird, der am Pedal oder an einem Kolben des THZ befestigt ist und bei einer bestimmten Stellung des Bremspedals aktiviert wird. In einer weiteren alternativen Ausführungsform der Erfindung erfolgt eine Plausibilisierung der Daten des Pedalwinkelsensors, indem überprüft wird, ob der Druck im ersten Bremsdruckerzeugsmittel und/oder die Druckmittelmenge in einem der Druckspeicher einen der entsprechenden Pedalstellung entsprechenden Wert überschreitet.

Bevorzugt umfasst das Bremssystem eine elektronische Steuereinheit, welche die verfügbaren Informationen, z.B. von Pedalbetätigungssensor und/oder Drucksensor und/oder Generator-Moment, auswertet und die ansteuerbaren Ventile und ggf. das zweite Bremsdruckerzeugungsmittel entsprechend ansteuert.

Weitere bevorzugte Ausführungsformen ergeben sich aus den Unteransprüchen und der nachfolgenden Beschreibung eines Ausführungsbeispiels an Hand von Figuren.

Es zeigen:
- Figur 1: ein beispielsgemäßes Bremssystem im Ruhezustand,
- Fig. 2: ein schematisch dargestelltes Kraftfahrzeug,
- Fig. 3: den zeitlichen Ablauf eines beispielsgemäßen Bremsvorgangs,
- Fig. 4-7: Verfahrensschritte eines beispielsgemäßen Verfahrens,

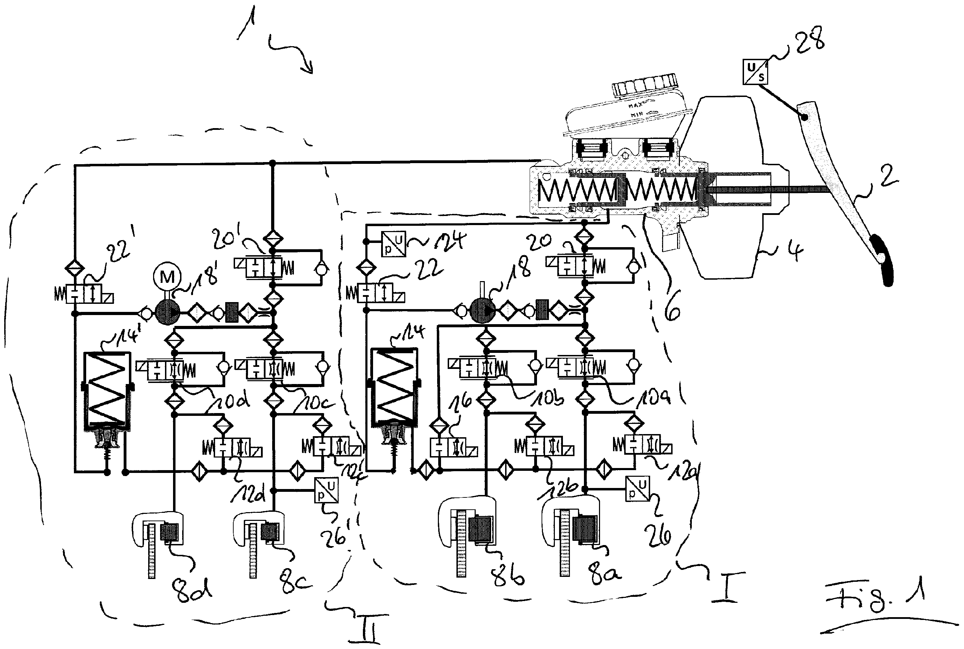

In Figur 1 ist ein Prinzipschaltplan eines Bremssystems 1 für ein Kraftfahrzeug dargestellt. Das beispielsgemäße Bremssystem umfasst zwei Bremskreise I, II, wobei jeweils zwei Reibungsbremsen 8a, 8b bzw. 8c, 8d des Fahrzeugs in einem Bremskreis I, II zusammengefasst sind. Der Fahrer des Kraftfahrzeugs gibt über das Bremspedal 2 den Verzögerungswunsch ein. Um mittels der Reibungsbremsen 8 ein Bremsmoment aufzubauen, ist das Bremssystem 1 mit einem ersten Bremsdruckerzeugungsmittel 6 versehen, das vorzugsweise als Tandemhauptbremszylinder 6 mit Unterdruckbremskraftverstärker 4 ausgelegt ist. Dabei wird der vom Tandemhauptbremszylinder 6 aufgebrachte Bremsdruck über Hydraulikleitungen mit einem Druckmittel an die Reibungsbremsen 8 weitergegeben. Der erste Bremskreis I ist beispielsgemäß mit den Reibungsbremsen 8a, 8b der Vorderachse VA verbunden, an dem zweiten Bremskreis II sind die Reibungsbremsen 8c, 8d der Hinterachse HA angeschlossen. Alternativ kann das Bremssystem auch eine diagonale Bremskreisaufteilung und/oder einem Tandemhauptbremszylinder 6 ohne Hilfskraft, d.h. ohne Bremskraftverstärker 4, aufweisen.

Bei dem in Fig. 1 dargestellten Beispiel weisen die beiden Bremskreise I, II hydraulisch teilweise identische Komponenten auf, weshalb im Folgenden nur der erste Bremskreis I und die Unterschiede beschrieben werden. Eine vom Hauptbremszylinder 6 ausgehende Bremsleitung verzweigt sich nach einem stromlos offenen Trennventil (TV) 20 in zwei zu den Reibungsbremsen 8a, 8b der Vorderachse VA führende Bremsleitungen, in welchen jeweils ein stromlos -also ohne elektrische Ansteuerung- offenes Einlassventil (SO-Ventil) 10a, 10b vorgesehen ist. Zwischen jedem Einlassventil (SO-Ventil) 10a, 10b und der entsprechenden Radbremse 8a, 8b geht von der jeweiligen Bremsleitung je eine Rückführleitung aus, in welcher je ein stromlos geschlossenes Auslassventil (SG-Ventil) 12a, 12b angeordnet ist. Beide Rückführleitungen sind über ein gemeinsames Bremsleitungsstück an einen Druckspeicher 14 angeschlossen. Bremskreis I weist eine durch einen elektrischen Antriebsmotor angetriebene, hochdruckerzeugende Pumpe (Motor-Pumpen-Aggregat) 18 auf (zweites Bremsdruckerzeugungsmittel). Diese ist ansaugseitig mit dem Druckspeicher 14 verbunden. Ausgangsseitig ist die Pumpe 18 mit der Bremsleitung zwischen Trennventil 20 und den Einlassventilen 10 verbunden. Zwischen Druckspeicher 14 und Pumpe 18 führt eine weitere Bremsleitung über ein stromlos geschlossenes elektronisches Umschaltventil (EUV) 22 zu der Bremsleitung zwischen Hauptbremszylinder 6 und Trennventil 20. Erfindungsgemäß weist Bremskreis I ein zusätzliches Auslassventil 16 auf, welches eine weitere hydraulische Verbindung zwischen der Bremsleitung hinter Trennventil 20 und dem Druckspeicher 14 schalten kann. Zweckmäßigerweise weist auch Bremskreis II ein zusätzliches Auslassventil auf, insbesondere bei einem diagonal aufgeteilten Bremssystem. Somit kann auch bei geschlossenen Einlassventilen 10a, 10b Druckmittel in den Druckspeicher abgeleitet werden.

Bei dem Bremssystem 1 handelt es sich um ein regeneratives Bremssystem, das neben den hydraulisch betätigten Reibungsbremsen 2 auch eine oder mehrere nicht gezeigte elektrische Maschine(n) aufweist, die zur Erzeugung von elektrischer Energie als Generator betrieben werden. Über einen Weggeber 28, der am Bremspedal 6 angeordnet ist, wird das Maß der Bremspedalbetätigung erfasst. Prinzipiell können aber auch andere Sensoren eingesetzt werden, die ein zur Bremsbetätigung durch den Fahrer proportionales Signal liefern. Zusätzlich ist ein Drucksensor 24 vorhanden, der sich an der zum Tandemhauptzylinder 6 führenden Hydraulikleitung des Bremskreises I befindet und den Vordruck bestimmt. In einer bevorzugten Ausführungsform der Erfindung wird der Druckmitteldruck an den Reibungsbremsen 8 über Drucksensoren 26, 26' bestimmt, die jeweils in einer Hydraulikleitung einer Radbremse 8a, 8c angeordnet sind. In einer alternativen bevorzugten Ausführungsform der Erfindung wird der Druck in den Reibungsbremsen anhand eines an sich bekannten Modells geschätzt.

Zur Steuerung und/oder Regelung des Bremssystems 1 umfasst dieses eine elektronische Regeleinheit 30, welche die elektronisch steuerbaren Hydraulikventile 10, 12, 16, 20, 22 sowie die Pumpe 18 ansteuert. Um ein für den Fahrer möglichst komfortables Bremsgefühl über das Bremspedal 2 zu realisieren, kann während dem Betrieb des Generators Druckmittel in die beiden Druckspeicher 14 (NDS: Niederdruckspeicher) abgeleitet werden. In den Druckspeichern 14 vorhandenes Druckmittel kann mittels der Pumpe 18 in die Reibungsbremsen 8 gefördert werden, wodurch ein zusätzliches Bremsmoment in den Reibungsbremsen aufgebaut wird.

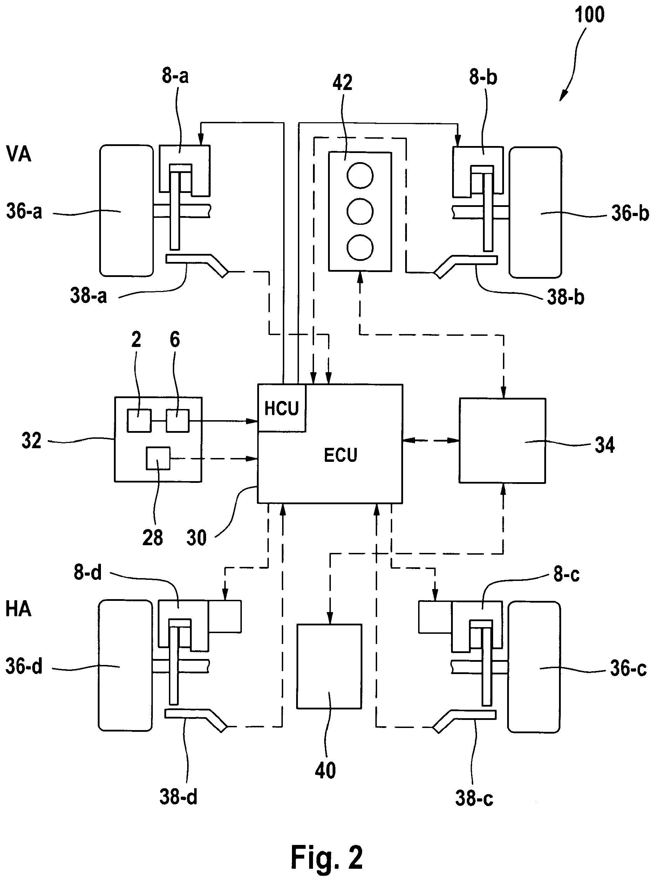

Figur 2 zeigt ein Kraftfahrzeug 100. Bei dem beispielgemäßen Fahrzeug handelt es sich um ein Hybridfahrzeug, welches einen Verbrennungsmotor 42 und ein oder mehrere elektrische Antriebsmotoren 40 umfasst, die als Generator zur Ladung der Batterie angesteuert werden können, um eine oder mehrere nicht gezeigte Fahrzeugbatterien aufzuladen. Zur Steuerung des elektrischen Antriebs 40 ist dabei eine Motorsteuereinheit 34 vorgesehen, welche mit der elektronischen Steuereinheit ECU im Bremsensteuergerät 30 (welches auch eine die Ventile 10, 12, 16, 20, 22 umfassende hydraulische Steuereinheit HCU umfasst) in Verbindung steht. Im gezeigten Beispiel wirkt die elektrisch-regenerative Bremse 40 (d.h. der als Generator betriebene elektrische Antrieb) auf die Hinterachse HA des Fahrzeugs.

Für das erfindungsgemäße Verfahren ist es prinzipiell nicht relevant, welche der Räder 36a, 36b, 36c, 36d zusätzlich zu den Reibungsbremsen 8a, 8b, 8c, 8d regenerativ gebremst werden. Die unten beschriebenen Verfahrensschritte sind hiervon prinzipiell unabhängig.

Ein Bremswunsch des Fahrers wird über eine Bremsbetätigungseinheit 32 festgestellt, die ein Bremspedal 2, ein erstes Bremsdruckerzeugungsmittel 6, insbesondere einen Tandemhauptbremszlinder, und einen Pedalweg- oder Pedalwinkelsensor 28 umfasst. Diese leitet Druckmittel (dargestellt als durchgezogene Linie) und elektrische Signale (dargestellt als gestrichelte Linie) an die elektronische Steuereinheit ECU des Bremsensteuergeräts 30 weiter. In Figur 2 ist ein Bremssystem dargestellt, welche an der Hinterachse elektromechanische (Reib-)Bremsen an Stelle von hydraulischen Reibungsbremsen aufweist. Das Fahrzeug umfasst weiterhin Radgeschwindigkeitssensoren 38a, 38b, 38c, 38d, die ihre Signale ebenfalls an die elektronische Steuereinheit 30 senden, wodurch z.B. eine Schlupfregelung des Bremsdrucks in den einzelnen Reibungsbremsen 8a, 8b, 8c, 8d erfolgen kann.

Elektronische Steuereinheit 30 und Motorsteuereinheit 34 tauschen für eine elektrisch-regenerative Bremsung benötigte Informationen wie die momentane Fahrzeuggeschwindigkeit und die momentan verfügbare Generatorverzögerung aus. Während eines Bremsvorgangs kann hierbei eine Anforderung von Bremsverzögerung des Generators erfolgen. In einer alternativen Ausführungsform weist ein zur Durchführung des erfindungsgemäßen Verfahrens geeignetes Kraftfahrzeug eine elektrische Vakuumpumpe auf, die einen Unterdruckbremskraftverstärker 4 mit Vakuum versorgt, um den Tandemhauptbremszylinder 6 mit Hilfskraft zu betreiben.

In einer alternativen Ausführungsform umfasst das Bremssystem ein zweites Sensorelement zur Erfassung einer Bremspedalbetätigung, welches von dem Bremspedalwegsensor oder -winkelsensor 24 unabhängig ist. Wenn die Bremspedalbetätigung einen vorgegebenen Wert erreicht, wird dieses zweite Sensorelement vorteilhafterweise aktiviert und beendet insbesondere einen Befüllungsvorgang eines Druckspeichers (z.B. durch Schließen des/der zusätzlichen Auslassventil/e 16). Hierdurch wird ein korrektes Erkennung des Fahrerbremswunsches sicherstellt, für den Fall, dass das Signal des Bremspedalwegsensors 24 fehlerhaft ist, z.B. aufgrund einer mechanischen Beschädigung des Sensors 24. Das zweite Sensorelement könnte am Kolben des Druckstangenkreises des Hauptzylinders oder am Bremspedal (ähnlich einem Bremslichtschaltelement, wenn auch mit einem verschobenen Schaltpunkt) angeordnet sein.

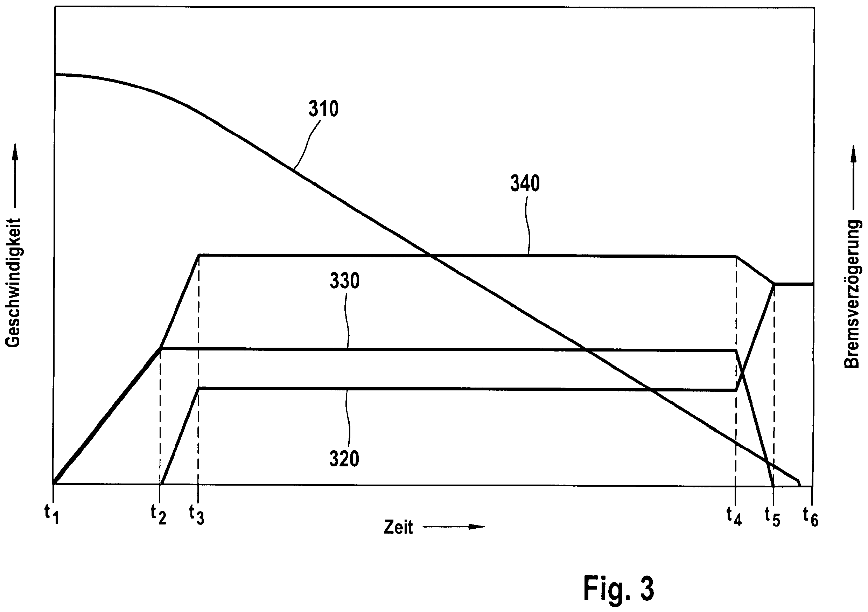

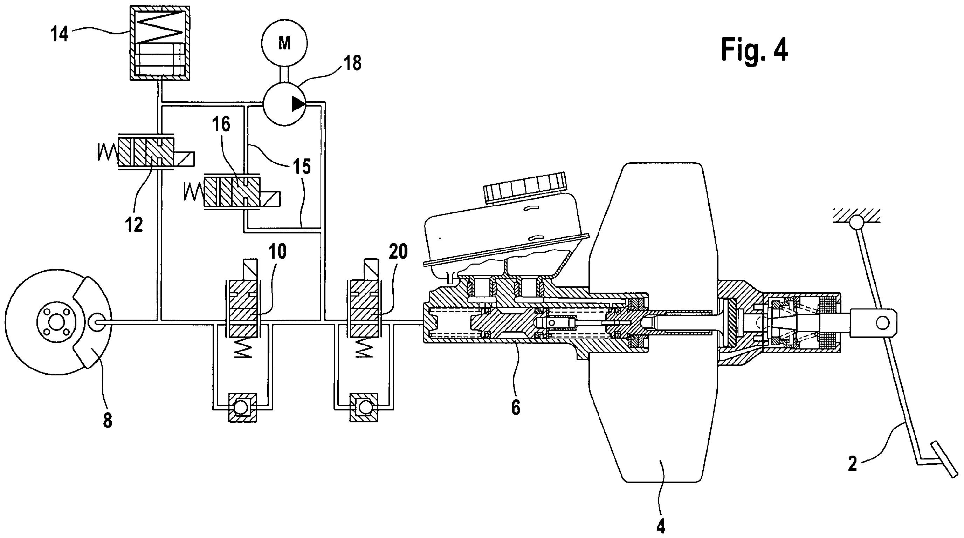

Der Ablauf eines beispielhaften Bremsvorgangs ist in Fig. 3 gezeigt. Als Abszisse ist die Zeit aufgetragen, die Ordinate gibt die Geschwindigkeit des Kraftfahrzeugs bzw. die momentane Bremsverzögerung an. Die Fahrzeuggeschwindigkeit ist als Linie 310, die Bremsverzögerung durch den Generator als Linie 330, die Bremsverzögerung durch Reibungsbremsen als Linie 320 dargestellt. Linie 340 gibt die resultierende Gesamtverzögerung an. Das Fahrzeug wird im Verlauf des Bremsvorgangs, der im Zeitpunkt t₁ beginnt und im Zeitpunkt t₆ endet, bis zum Stillstand abgebremst. Hierbei erfolgt zunächst eine Verzögerung des Fahrzeugs nur durch die elektrisch-regenerative Bremse. Zwischen t₁ und t₂ wird dazu das Druckmittel der Reibungsbremsen in Druckspeicher abgeleitet. Im Zeitpunkt t₂ wird das Befüllen des oder der Druckspeicher beendet und die bisher abgetrennte Radbremse wieder mit dem Tandemhauptbremszylinder verbunden. Bis zum Zeitpunkt t₃ tritt der Fahrer stärker auf das Bremspedal und hält anschließend die Pedalstellung. Die zusätzlich angeforderte Verzögerung wird hierbei von den Reibungsbremsen bereitgestellt, während die Generatorbremsverzögerung konstant bleibt. Im Zeitpunkt t₄ ist die Geschwindigkeit des Wagens so weit gesunken, dass die Generatorverzögerung abnimmt. Daher findet zwischen t₄ und t₅ ein Blending-Vorgang statt, bei dem zusätzlicher Bremsdruck aufgebaut und die elektrisch-regenerative Verzögerung stufenlos verringert wird ("ramp-out"). Zum Zeitpunkt t₆ ist der Stillstand des Fahrzeugs erreicht. Die Verfahrensschritte zum Betreiben des Bremssystems werden weiter unten anhand der Fig. 4-7 erläutert.

Wird der Bremsvorgang vom Fahrer beendet, ohne dass ein Blending-Vorgang erforderlich war, so werden die Druckspeicher durch Öffnen der Auslassventile 12 geleert. Durch mehrmalige kurzzeitige Betätigung des/der elektronischen Umschaltventile 22 wird anschließend eine vollständige Entleerung sichergestellt.

Fig. 4 zeigt einen vereinfachten Bremskreis des erfindungsgemäßen Bremssystems im Ruhezustand, d.h. den Zustand ohne elektrische Ansteuerung der hydraulischen Komponenten, wenn der Fahrer das Bremspedal nicht betätigt hat. Die Bezeichnung der Hydraulikkomponenten entspricht Fig. 1. Zur besseren Übersicht ist nur eine Radbremse dargestellt, d.h. gegenüber Bremskreis I aus Fig. 1 fehlt die zweite Radbremse und das elektronische Umschaltventil 22.

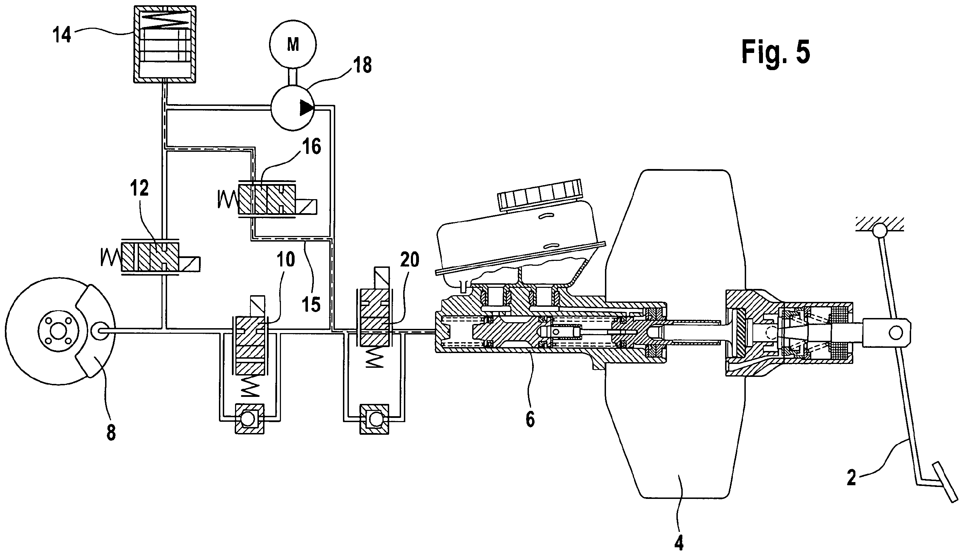

Wird das erste Bremsdruckerzeugungsmittel 6 mittels des Bremspedals 2 betätigt, so wird zunächst eine rein regenerative Bremsung durchgeführt, sofern Fahrsituation und Betriebszustand des Fahrzeugs dies ermöglichen. Hierbei wird das Rad durch den Betrieb des Generators (nicht dargestellt) unter Erzeugung elektrischer Energie abgebremst. Das von dem Bremsdruckerzeugungsmittel 6 aufgebrachte Druckmittelvolumen wird durch ein Schließen des Einlassventils 10 und ein Öffnen des zweiten Auslassventils 16 in den Druckspeicher 14 abgeleitet, ohne das die Reibungsbremse 8 mit Druckmittel beaufschlagt wird. Diese Betätigung der Bremsanlage im Rekuperationsbetrieb ist in Fig. 5 schematisch dargestellt.

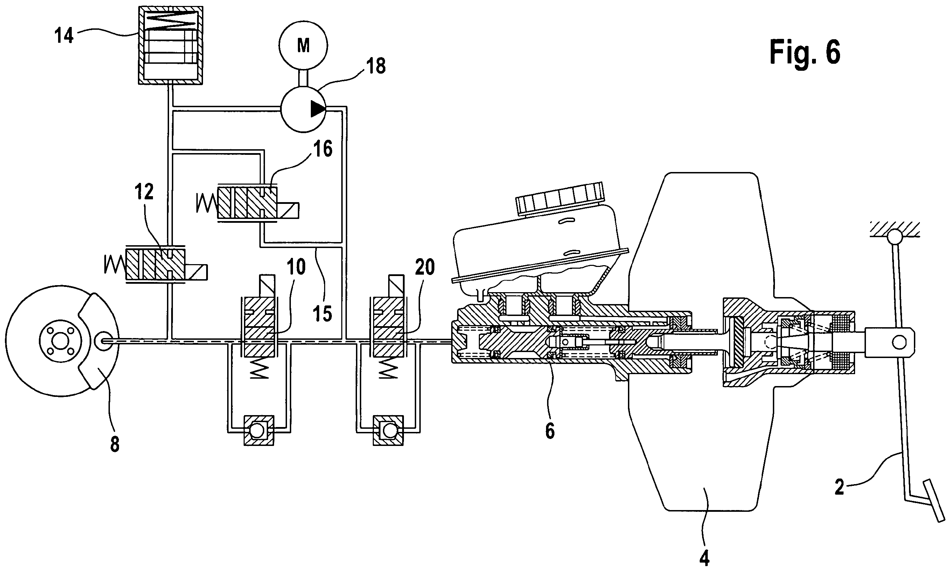

Übersteigt der Bremswunsch des Fahrers das vom Generator lieferbare Bremsmoment, so wird die Reibungsbremse 8 der regenerativen Bremse zugeschaltet bzw. überlagert. Wie in Fig. 6 gezeigt, wird hierzu das zweite Auslassventil 16 geschlossen und das Einlassventil 10 geöffnet. Bei stärkerer Bremsbetätigung wird nun von Bremsdruckerzeugungsmittel 6 Druckmittel in die Reibungsbremsen 2 gepresst, was durch die Reibungsbremse 8 zu einer höheren Gesamtverzögerung führt.

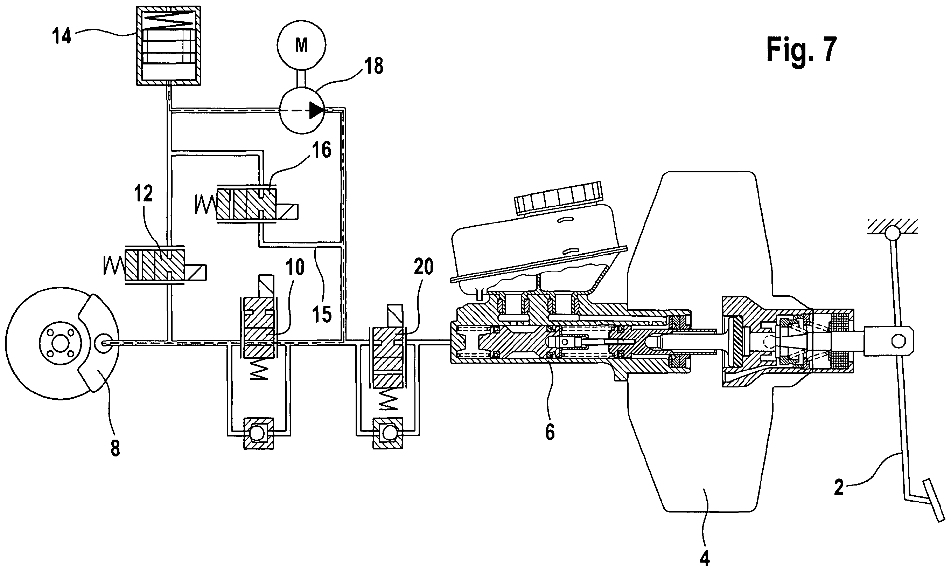

Nimmt die vom Generator bereitgestellte Verzögerung ab, so erfolgt ein Blending-Vorgang, wobei das Bremsmoment stufenweise oder stufenlos in zunehmendem Maße durch die Reibungsbremsen aufgebaut wird. Dieses Blending ist schematisch in Fig. 7 dargestellt. Hierzu wird das Trennventil 20 geschlossen und anschließend das zweite Bremsdruckerzeugungsmittel 18 aktiviert. In dem Druckspeicher 14 vorhandenes Druckmittel wird also mittels der Pumpe 18 in die Radbremse 8 gefördert, womit eine weitere Erhöhung des Bremsdruckes in der Reibungsbremse stattfindet.

## Patentansprüche

1. Verfahren zur Steuerung oder Regelung eines Bremssystems für ein Kraftfahrzeug, das an zumindest einem Rad eine elektrisch-regenerative Bremse (40) und eine von einem ersten Bremsdruckerzeugungsmittel (6) über ein Druckmittel betätigbare Reibungsbremse (8) aufweist, wobei die Reibungsbremse (8) über ein ansteuerbares Einlassventil (10) mit dem ersten Bremsdruckerzeugungsmittel (6) und über ein erstes ansteuerbares Auslassventil (12) mit einem Druckspeicher (14) verbindbar ist, so dass ein Ableiten eines von dem ersten Bremsdruckerzeugungsmittel (6) aufgebrachten Druckmittelvolumens über das erste Auslassventil (12) in den Druckspeicher (14) erfolgen kann, wobei während eines regenerativen Bremsvorgangs von dem ersten Bremsdruckerzeugungsmittel (6) aufgebrachtes Druckmittelvolumen über ein zweites ansteuerbares Auslassventil (16), welches in einer weiteren hydraulische Verbindung (15) zwischen dem Bremsdruckerzeugungsmittel (6) und dem Druckspeicher (14) angeordnet ist, in den Druckspeicher (14) abgelassen wird, wobei nach Beendigung eines regenerativen Bremsvorgangs der Druckspeicher (14) durch Öffnen des ersten (12) oder zweiten (16) Auslassventils geleert wird.

2. Verfahren nach Anspruch 1, **dadurch gekennzeichnet, dass** zum Ablassen von Druckmittelvolumen in den Druckspeicher (14) das Einlassventil (10) geschlossen und das zweite Auslassventil (16) geöffnet wird.

3. Verfahren nach einem der Ansprüche 1 oder 2, **dadurch gekennzeichnet, dass** zur Zuschaltung der Reibungsbremse (8) bei einem regenerativen Bremsvorgang das zweite Auslassventil (16) geschlossen wird, das Einlassventil (10) geöffnet wird und das erste Auslassventil (12) geschlossen bleibt oder wird.

4. Verfahren nach einem der Ansprüche 1 bis 3, **dadurch gekennzeichnet, dass** zum Aufbau von Bremsdruck in der Reibungsbremse (8) das Druckmittel von einem zweiten Bremsdruckerzeugungsmittel (18), insbesondere einer elektrisch angetriebenen Hydraulikpumpe, aus dem Druckspeicher (14) in die Reibungsbremse (8) befördert wird, wobei das zweite Bremsdruckerzeugungsmittel (18) parallel zu dem zweiten Auslassventil (16) zwischen dem Druckspeicher (14) und dem ersten Bremsdruckerzeugungsmittel (6) angeordnet ist.

5. Bremssystem für ein Kraftfahrzeug, das an zumindest einem Rad eine elektrisch-regenerative Bremse (40) und eine von einem ersten Bremsdruckerzeugungsmittel (6) über ein Druckmittel hydraulisch betätigbare Reibungsbremse (8) aufweist, wobei die Reibungsbremse (8) über ein ansteuerbares Einlassventil (10) mit dem ersten Bremsdruckerzeugungsmittel (6) und über ein erstes ansteuerbares Auslassventil (12) mit einem Druckspeicher (14) verbindbar ist, so dass ein Ableiten eines von dem Bremsdruckerzeugungsmittel (6) aufgebrachten Druckmittelvolumens über das erste Auslassventil (12) in den Druckspeicher (14) erfolgen kann, wobei während eines regenerativen Bremsvorgangs von dem ersten Bremsdruckerzeugungsmittel (6) aufgebrachtes Druckmittelvolumen über eine weitere hydraulische Verbindung (15) mit einem zweiten ansteuerbaren Auslassventil (16) in den Druckspeicher (14) abgelassen wird, wobei zwischen dem ersten Bremsdruckerzeugungsmittel (6) und dem Einlassventil (10) ein weiteres ansteuerbares Ventil (20) angeordnet ist, wobei das erste Bremsdruckerzeugungsmittel (6) über das weitere Ventil (20) und das zweite Auslassventil (16) mit dem Druckspeicher (14) verbindbar ist, und wobei in der elektronischen Steuereinheit (30) des Bremssystems ein Verfahren nach einem der vorhergehenden Ansprüche ausgeführt wird.

6. Bremssystem nach Anspruch 5, **dadurch gekennzeichnet, dass** die weitere hydraulische Verbindung (15) zwischen erstem Bremsdruckerzeugungsmittel (6) und Einlassventil (10) abzweigt.

7. Bremssystem nach Anspruch 5 oder 6, **dadurch gekennzeichnet, dass** dieses ein zweites Bremsdruckerzeugungsmittel (18) aufweist, insbesondere ein Motor-Pumpen-Aggregat, mit welchem das Druckmittel aus dem Druckspeicher (14) in die Reibungsbremse (8) befördert werden kann.

8. Bremssystem nach Anspruch 7, **dadurch gekennzeichnet, dass** das zweite Bremsdruckerzeugungsmittel (18) parallel zu dem zweiten Auslassventil (16) zwischen dem Druckspeicher (14) und dem ersten Bremsdruckerzeugungsmittel (6) angeordnet ist.

9. Bremssystem nach mindestens einem der Ansprüche 5 bis 8, **dadurch gekennzeichnet, dass** die hydraulisch betätigbare Reibungsbremse (8) an einem Rad einer ersten Achse des Fahrzeugs, insbesondere der Vorderachse, angeordnet ist und an dem zweiten Rad der ersten Achse eine weitere hydraulisch betätigbare Reibungsbremse (8) angeordnet ist, während an den Rädern einer zweiten Achse des Fahrzeugs, insbesondere der Hinterachse, elektromechanisch betätigbare Reibungsbremsen (8) angeordnet sind.

10. Bremssystem nach mindestens einem der Ansprüche 5 bis 8, **dadurch gekennzeichnet, dass** die hydraulisch betätigbare Reibungsbremse (8) an einem Rad angeordnet ist und an allen anderen Räder des Fahrzeugs weitere über das Druckmittel hydraulisch betätigbare Reibungsbremsen (8) angeordnet sind, wobei je zwei Reibungsbremsen (8) in einem Bremskreis (I, II) zusammengefasst sind.

11. Bremssystem nach Anspruch 10, **dadurch gekennzeichnet, dass** jeweils eine Reibungsbremse (8) eines Vorderrads und eine Reibungsbremse (8) eines diagonal gegenüberliegenden Hinterrads in einem Bremskreis (I, II) zusammengefasst sind, und dass ein Bremskreis (I, II) das zweite ansteuerbare Auslassventil (16) und den Druckspeicher (14) aufweist und der andere Bremskreis (I,II) ein weiteres zweites ansteuerbares Auslassventil (16) und einen weiteren Druckspeicher (14) aufweist.

12. Bremssystem nach mindestens einem der Ansprüche 5 bis 11, **dadurch gekennzeichnet, dass** das Bremssystem (1) eine Fahrdynamikregelung aufweist, die Schlupf- und/oder Gierverhalten des Fahrzeugs regelt.

13. Bremssystem nach Anspruch 12, **dadurch gekennzeichnet, dass** die elektrisch-regenerative Bremse (40) von der Fahrdynamikregelung angesteuert wird.

## Claims

1. Method for controlling or regulating a brake system for a motor vehicle which has, at at least one wheel, an electrically regenerative brake (40) and a friction brake (8) which can be actuated by a first brake pressure generation means (6) via a pressure medium, it being possible for the friction brake (8) to be connected via an actuable inlet valve (10) to the first brake pressure generation means (6) and via a first actuable outlet valve (12) to a pressure accumulator (14), with the result that a discharge of a pressure medium volume which is provided by the first brake pressure generation means (6) can take place via the first outlet valve (12) into the pressure accumulator (14), a pressure medium volume which is provided by the first brake pressure generation means (6) being discharged into the pressure accumulator (14) during a regenerative braking operation via a second actuable outlet valve (16) which is arranged in a further hydraulic connection (15) between the brake pressure generation means (6) and the pressure accumulator (14), the pressure accumulator (14) being emptied by way of opening of the first (12) or second (16) outlet valve after the end of a regenerative braking operation.

2. Method according to Claim 1, **characterized in that** the inlet value (10) is closed and the second outlet valve (16) is opened in order to discharge pressure medium volume into the pressure accumulator (14).

3. Method according to either of Claims 1 and 2, **characterized in that** the second outlet valve (16) is closed, the inlet valve (10) is opened and the first outlet valve (12) remains closed or is closed in order to switch on the friction brake (8) during a regenerative braking operation.

4. Method according to one of Claims 1 to 3, **characterized in that**, in order to build up brake pressure in the friction brake (8), the pressure medium is conveyed by a second brake pressure generation means (18), in particular an electrically driven hydraulic pump, out of the pressure accumulator (14) into the friction brake (8), the second brake pressure generation means (18) being arranged parallel to the second outlet valve (16) between the pressure accumulator (14) and the first brake pressure generation means (6).

5. Brake system for a motor vehicle which has, at at least one wheel, an electrically regenerative brake (40) and a friction brake (8) which can be actuated hydraulically by a first brake pressure generation means (6) via a pressure medium, it being possible for the friction brake (8) to be connected via an actuable inlet valve (10) to the first brake pressure generation means (6) and via a first actuable outlet valve (12) to a pressure accumulator (14), with the result that a discharge of a pressure medium volume which is provided by the brake pressure generation means (6) can take place via the first outlet valve (12) into the pressure accumulator (14), a pressure medium volume which is provided by the first brake pressure generation means (6) being discharged during a regenerative braking operation via a further hydraulic connection (15) to a second actuable outlet valve (16) into the pressure accumulator (14), a further actuable valve (20) being arranged between the first brake pressure generation means (6) and the inlet valve (10), it being possible for the first brake pressure generation means (6) to be connected via the further valve (20) and the second outlet valve (16) to the pressure accumulator (14), and a method according to one of the preceding claims being carried out in the electronic control unit (30) of the brake system.

6. Brake system according to Claim 5, **characterized in that** the further hydraulic connection (15) branches off between the first brake pressure generation means (6) and the inlet valve (10).

7. Brake system according to Claim 5 or 6, **characterized in that** it has a second brake pressure generation means (18), in particular a motor/pump assembly, by way of which the pressure medium can be conveyed out of the pressure accumulator (14) into the friction brake (8).

8. Brake system according to Claim 7 **characterized in that** the second brake pressure generation means (18) is arranged parallel to the second outlet valve (16) between the pressure accumulator (14) and the first brake pressure generation means (6).

9. Brake system according to at least one of Claims 5 to 8, **characterized in that** the hydraulically actuable friction brake (8) is arranged at a wheel of a first axle of the vehicle, in particular the front axle, and a further hydraulically actuable friction brake (8) is arranged at the second wheel of the first axle, whereas electromechanically actuable friction brakes (8) are arranged at the wheels of a second axle of the vehicle, in particular the rear axle.

10. Brake system according to at least one of Claims 5 to 8, **characterized in that** the hydraulically actuable friction brake (8) is arranged at one wheel, and further friction brakes (8) which can be actuated hydraulically via the pressure medium are arranged at all other wheels of the vehicle, in each case two friction brakes (8) being combined in one brake circuit (I, II).

11. Brake system according to Claim 10, **characterized in that** in each case one friction brake (8) of a front wheel and one friction brake (8) of a diagonally opposite rear wheel are combined in a brake circuit (I, II), and **in that** one brake circuit (I, II) has the second actuable outlet valve (16) and the pressure accumulator (14), and the other brake circuit (I, II) has a further second actuable outlet valve (16) and a further pressure accumulator (14).

12. Brake system according to at least one of Claims 5 to 11, **characterized in that** the brake system (1) has a vehicle dynamics control system which controls slip and/or yaw behaviour of the vehicle.

13. Brake system according to Claim 12, **characterized in that** the electrically regenerative brake (40) is actuated by the vehicle dynamics control system.

## Revendications

1. Procédé de commande ou de régulation d'un système de frein pour un véhicule automobile, qui présente, au niveau d'au moins une roue, un frein à récupération d'énergie (40) et un frein à friction (8) pouvant être actionné par le biais d'un moyen de pression par un premier moyen de génération de pression de freinage (6), le frein à friction (8) pouvant être connecté par le biais d'une soupape d'entrée commandable (10) au premier moyen de génération de pression de freinage (6) et par le biais d'une première soupape de sortie commandable (12) à un accumulateur de pression (14), de telle sorte qu'une dérivation d'un volume de fluide sous pression appliqué par le premier moyen de génération de pression de freinage (6) puisse avoir lieu par le biais de la première soupape de sortie (12) dans l'accumulateur de pression (14), un volume de fluide sous pression appliqué par le premier moyen de génération de pression de freinage (6) pouvant être évacué pendant une opération de freinage à récupération dans l'accumulateur de pression (14) par le biais d'une deuxième soupape de sortie commandable (16) qui est disposée dans une connexion hydraulique supplémentaire (15) entre le moyen de génération de pression de freinage (6) et l'accumulateur de pression (14), l'accumulateur de pression (14) étant vidé par ouverture de la première (12) ou de la deuxième (16) soupape de sortie après la fin d'une opération de freinage à récupération.

2. Procédé selon la revendication 1, **caractérisé en ce que** pour évacuer le volume de fluide sous pression dans l'accumulateur de pression (14), la soupape d'entrée (10) est fermée et la deuxième soupape de sortie (16) est ouverte.

3. Procédé selon l'une quelconque des revendications 1 ou 2, **caractérisé en ce que** pour le raccordement du frein à friction (8) lors d'une opération de freinage à récupération, la deuxième soupape de sortie (16) est fermée, la soupape d'entrée (10) est ouverte et la première soupape de sortie (12) reste ou est fermée.

4. Procédé selon l'une quelconque des revendications 1 à 3, **caractérisé en ce que** pour augmenter la pression de freinage dans le frein à friction (8), le fluide sous pression est refoulé par un deuxième moyen de génération de pression de freinage (18), en particulier une pompe hydraulique à entraînement électrique, depuis l'accumulateur de pression (14) dans le frein à friction (8), le deuxième moyen de génération de pression de freinage (18) étant disposé parallèlement à la deuxième soupape de sortie (16) entre l'accumulateur de pression (14) et le premier moyen de génération de pression de freinage (6).

5. Système de freinage pour un véhicule automobile, qui présente, au niveau d'au moins une roue, un frein à récupération d'énergie (40) et un frein à friction (8) pouvant être actionné hydrauliquement par le biais d'un moyen de pression par un premier moyen de génération de pression de freinage (6), le frein à friction (8) pouvant être connecté par le biais d'une soupape d'entrée commandable (10) au premier moyen de génération de pression de freinage (6) et par le biais d'une première soupape de sortie commandable (12) à un accumulateur de pression (14), de telle sorte qu'une dérivation d'un volume de fluide sous pression appliqué par le moyen de génération de pression de freinage (6) puisse avoir lieu par le biais de la première soupape de sortie (12) dans l'accumulateur de pression (14), un volume de fluide sous pression appliqué par le premier moyen de génération de pression de freinage (6) pouvant être évacué pendant une opération de freinage à récupération dans l'accumulateur de pression (14) par le biais d'une connexion hydraulique supplémentaire (15) avec une deuxième soupape de sortie commandable (16), une soupape commandable supplémentaire (20) étant disposée entre le premier moyen de génération de pression de freinage (6) et la soupape d'entrée (10), le premier moyen de génération de pression de freinage (6) pouvant être connecté à l'accumulateur de pression (14) par le biais de la soupape supplémentaire (20) et de la deuxième soupape de sortie (16), et un procédé selon l'une quelconque des revendications précédentes étant mis en oeuvre dans l'unité de commande électronique (30) du système de freinage.

6. Système de freinage selon la revendication 5, **caractérisé en ce que** la connexion hydraulique supplémentaire (15) est branchée entre le premier moyen de génération de pression de freinage (6) et la soupape d'entrée (10).

7. Système de freinage selon la revendication 5 ou 6, **caractérisé en ce que** celui-ci présente un deuxième moyen de génération de pression de freinage (18), en particulier un groupe motopompe, avec lequel le fluide sous pression peut être refoulé hors de l'accumulateur de pression (14) dans le frein à friction (8).

8. Système de freinage selon la revendication 7, **caractérisé en ce que** le deuxième moyen de génération de pression de freinage (18) est disposé parallèlement à la deuxième soupape de sortie (16) entre l'accumulateur de pression (14) et le premier moyen de génération de pression de freinage (6).

9. Système de freinage selon au moins l'une quelconque des revendications 5 à 8, **caractérisé en ce que** le frein à friction à commande hydraulique (8) est disposé au niveau d'une roue d'un premier essieu du véhicule, en particulier l'essieu avant, et un frein à friction à commande hydraulique supplémentaire (8) est disposé au niveau de la deuxième roue du premier essieu, tandis que des freins à friction à commande électromécanique (8) sont disposés au niveau des roues d'un deuxième essieu du véhicule, en particulier l'essieu arrière.

10. Système de freinage selon au moins l'une quelconque des revendications 5 à 8, **caractérisé en ce que** le frein à friction à commande hydraulique (8) est disposé au niveau d'une roue et d'autres freins à friction (8) à commande hydraulique par le biais du fluide sous pression sont disposés au niveau de toutes les autres roues du véhicule, deux freins à friction (8) étant à chaque fois réunis dans un circuit de freinage (I, II).

11. Système de freinage selon la revendication 10, **caractérisé en ce qu'**un frein à friction (8) d'une roue avant et un frein à friction (8) d'une roue arrière diagonalement opposée sont à chaque fois réunis dans un circuit de freinage (I, II), et **en ce qu'**un circuit de freinage (I, II) présente la deuxième soupape de sortie commandable (16) et l'accumulateur de pression (14), et l'autre circuit de freinage (I, II) présente une deuxième soupape de sortie commandable supplémentaire (16) et un accumulateur de pression supplémentaire (14).

12. Système de freinage selon au moins l'une quelconque des revendications 5 à 11, **caractérisé en ce que** le système de freinage (1) présente une régulation dynamique de conduite qui régule le comportement de patinage et/ou de lacet du véhicule.

13. Système de freinage selon la revendication 12, **caractérisé en ce que** le frein à récupération d'énergie (40) est commandé par la régulation dynamique de conduite.
